# EUROPEAN PATENT APPLICATION

(11) **EP 1 231 445 A1**
(43) Date of publication of application: **14.08.2002**
(21) Application number: 99925321.4
(22) Date of filing: 14.06.1999
(51) Int. Cl.: F27D 7/06, C21B 11/00, C21C 5/40, C21C 5/46, C21C 7/00

(54) **THROUGH-HOLE SEALING DEVICE**

(71) Applicant: Kawasaki Jukogyo Kabushiki Kaisha, Kobe-shi, Hyogo 650-8670 (JP)
(72) Inventor: KISHIMOTO, Mitsuharu, Kako-gun, Hyogo 675-0151 (JP); YAJIMA, Kenichi, Kobe-shi, Hyogo 654-0131 (JP); KOZA, Yukihiko, Kobe-shi, Hyogo 651-2272 (JP); NOMOTO, Hiroki, Kobe-shi, Hyogo 655-0872 (JP)
(74) Representative: Abbie, Andrew Kenneth
(86) International application number: JP9903167
(87) International publication number: WO0077467

(57) **Abstract**

A through hole sealing device capable of sealing a through hole through which a pipe penetrates with a simple constitution even if a pressure difference is large is provided. Plural-stage gland packings (26) are arranged on the outer periphery of a pipe (21). The gland packings (26) are pressed radially inwardly by tubes (24) through compressive members (30). The tubes (24) press the gland packings (26) against the outer peripheral face of the pipe (21) by the pressure of a tightening gas supplied through a tightening gas supply port (31). The multi-stage tubes (24) and the gland packings (26) are held by ring spacers (30) and an outer tube (25). The pressing force of the gland packings (26) in sliding contact with the outer peripheral face of the pipe (21) can be regulated easily by the regulation of the pressure in the tubes (24), and a sealing performance can be improved easily with a simple constitution.

## Description

### [Technical Field]

The present invention relates to a through hole sealing device for tightly sealing a periphery of a shaft penetrating through a wall while permitting a movement of the shaft relative to the wall.

### [Background Art]

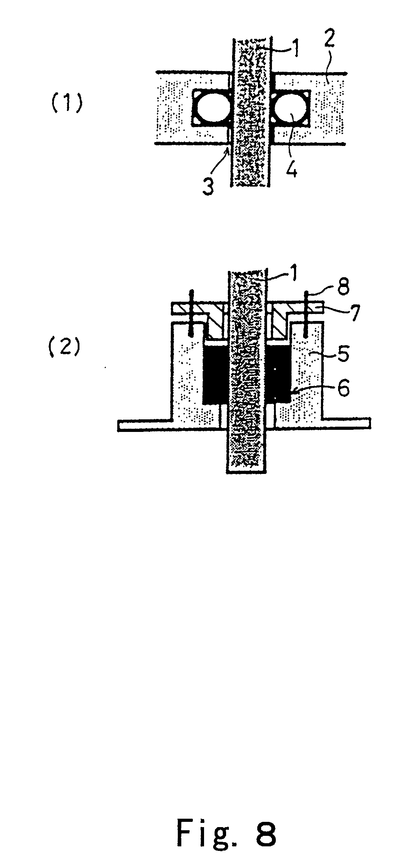

Conventionally, a sealing device shown in Fig. 8 has been used to tightly seal a portion of a wall through which a shaft penetrates when the shaft moves axially or around an axis thereof. As shown in Fig. 8(1), a portion where a shaft 1 penetrating through a through hole 3 provided in a wall 2 is sealed by keeping a tube 4 held in the through hole 3 in sliding contact with outer peripheral faces of the shaft 1. A fluid such as a gas or a liquid is filled into the tube 4, and the resulting pressure presses inner peripheries of the tube 4 against the outer peripheral faces of the shaft 1. Fig. 8(2) shows a gland packing type sealing device. The shaft 1 is surrounded by gland packing 6 held by holder 5. The gland packing 6 generates a radial pressing force by tightening and compressing a gland 7 by means of a bolt 8 in the axial direction of the shaft 1, thereby making close contact with the outer peripheral face of the shaft 1.

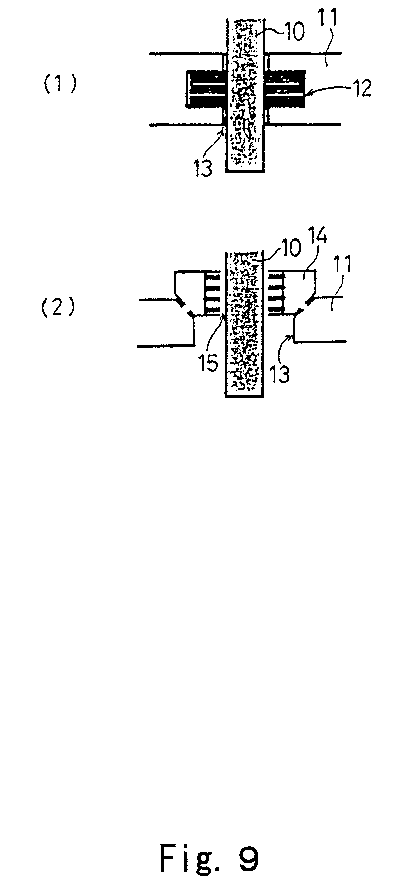

Fig. 9 shows an example of a sealing device disclosed in the prior art. Fig. 9(1) shows a multi-layered carbon ring disclosed in Japanese Laid-Open Patent Publication No. Hei. 1 - 172506 (corresponding to Japanese Patent No. 2628172). In this prior art, a clearance between a lance 10 and a lance hole 13 in a portion where the lance 10 is inserted into a furnace wall 11 of a metal melting furnace, is sealed by using a multi-layered carbon ring 12. In a metal melting furnace such as a converter, in order to inject refining oxygen or various material fines thereinto, the pipe lance 10 is inserted into the furnace and pulled out from the furnace along the axis of the lance 10, which operation must be repeated. In the metal melting furnace, an ambience in the furnace has a high temperature and a pressure different from an atmospheric pressure. The sealing device of the lance 10 needs to be resistant to a high temperature and conduct tight sealing to prevent the leakage of the ambience in the furnace to atmosphere, and the lance 10 needs to be axially movable. The carbon ring 12 has an inner peripheral face slidable on the outer peripheral face of the lance 10 and is circumferentially divided into a plurality of segments. The divided segments are held in a ring-shape by using elastic ring members, expandable and compressible, and pressed inwardly in the radial direction. The carbon ring 12 is made of sintered black lead having heat resistance and wear resistance.

Fig. 9(2) shows a lance hole cone disclosed in Japanese Laid-Open Patent Publication No. Sho. 60 - 187612 (corresponding to Publication of Examined Patent Application No. Sho. 62 - 20257). Lance cones 14 are placed on upper portions of a lance hole 13 formed in a furnace wall 11 and a labyrinth 15 formed in the lance cone 14 serve to seal the periphery of the lance 10.

In a smelting reduction plant of iron which has been developed in recent years, a pipe lance is provided for injecting oxygen into a furnace. The lance is inserted into a furnace through a hole provided in an exhaust gas duct wall of the furnace. Since a high temperature and high pressure gas including dust flows in the exhaust gas duct, there is a need for a sealing device in the hole through which the lance penetrates to isolate the hole from outside atmosphere.

The constitution for sealing the lance as the shaft 1 only by using rubber tube 4 shown in Fig. 8(1) has the following disadvantages.
1) When the shaft 1 is moved with the tubes 4 pressed against the shaft 1, part of the tube 4 is dragged by the shaft 1 and put into a clearance between the shaft 1 and the wall 2, causing the tubes 4 to be damaged.
2 ) In general, since a surface of the shaft 1 is not smooth, the surface of the tube 4 in contact with the shaft 1 is partially worn out when the shaft 1 is moved with the tubes 4 pressed against the shaft 1.
3) When a process fluid isolated from an outside air by the wall 2 has a high temperature, or the shaft 1 is a pipe and the fluid flowing through the inside of the shaft 1 has a high temperature, the tube 4 is damaged by heat.
4) When the tube 4 is torn due to its degradation, sealing might be completely broken, causing the process fluid to be blown out to the outside.

The gland packing type shown in Fig. 8(2) has the following disadvantages.
1) Although complete sealing is conducted by tightening, an excessive force is needed for movement of the shaft 1 because a tightening force is unadjustable. In particular, when the shaft 1 has a diameter as large as several hundreds millimeters, the shaft 1 is difficult to move. Also, when the shaft 1 has a large length in the axial direction, a radial pressing force tends to vary.
2) Although the application of a lubricating oil to the inner sides of the gland packing 6 somewhat facilitates the movement of the shaft 1, the lubricating oil adhered to the shaft 1 is carbonized upon contact with a high-temperature process gas and adhered to the shaft 1.

The sealing device of Fig. 9(1) or Fig. 9(2) has the following drawbacks.
1) These devices are basically labyrinth types, and perfectly tight sealing is therefore impossible. So, plenty of the process fluid leaks and, therefore these sealing devices are incapable of handling the high-pressure process fluid required in the smelting reduction plant.
2) When a sealing gas such as nitrogen is injected into a sealed portion to prevent an internal gas in a smelting reduction process from blowing off to the outside , a large amount of nitrogen is used, and much nitrogen is blown out to atmosphere, causing the ambience to be short of oxygen.

An object of the present invention is to provide a through hole sealing device capable of well conducting sealing if a pressure difference between a process fluid such as a gas in a furnace and atmosphere is large and reducing the amount of a nitrogen gas or the like for sealing.

### [Summary of the Invention]

According to the present invention, there is provided a through hole sealing device for tightly sealing a periphery of a shaft in a through hole, the shaft being inserted into the through hole formed in a wall in which a process fluid having a pressure different from an atmospheric pressure is held, and displacing relatively to the wall, wherein a clearance is provided between an outer peripheral face of the shaft and an inner peripheral face of the through hole, the device comprising:
a packing member that covers the outer peripheral face of the shaft;
a tube inserted between an outer peripheral face of the packing member and the inner peripheral face of the through hole and wound outside of the shaft, the tube having flexibility;
holding means for holding the packing member and the tube in the through hole with respect to the shaft; and
regulating means for filling a fluid in the tube and regulating a pressure of the fluid.

According to the present invention, the periphery of the shaft inserted into the through hole can be tightly sealed even if a pressure difference is large and regulation for facilitating the movement of the shaft can be performed, with a simple structure.

Specifically, the packing member covering the outer peripheral face of the shaft is provided between the inner peripheral face of the through hole and the outer peripheral face of the shaft in the through hole, the tube is inserted between the outer peripheral face of the packing member and the inner peripheral face of the through hole, and the holding means for holding the packing member and the tube is provided in the through hole. The fluid is filled into the tube and the pressure of the fluid is regulated by the regulating means. The pressure of the tube presses the packing member against the outer peripheral face of the shaft to allow the periphery of the shaft to be tightly sealed while permitting a displacement of the shaft relative to the wall in which the through hole is provided. By regulating the pressure of the fluid in the tube by the regulating means, a sliding state between the outer peripheral face of the shaft and the inner peripheral face of the packing member can be regulated to enable satisfactory sealing with a reduced load on the movement of the shaft. Therefore, its structure is simple, maintenance is easy, and a equipment cost is low. In addition, a high sealing performance is obtained with respect to the high pressure process fluid, and the amount of the injected sealing gas can be significantly reduced. By adjustably reducing the fluid pressure in the tube, the shaft can be easily moved, and the sealing performance can be maintained without a significant decrease during the movement of the shaft. By increasing the fluid pressure in the tube, tightness can be easily improved. If the tube should be damaged, the leakage of the process fluid can be prevented because the fluid in the tube serves to press the packing member against the outer peripheral face of the shaft 1. What is in direct contact with the outer peripheral face of the shaft is not the tube but the packing member, and therefore, encroachment of the tube into the pipe, and wear and tear of the tube due to abrasion can be prevented. Since the tube is not directly in contact with the shaft or the process fluid, durability of the tube can be improved. Also, by regulating the pressure of the fluid in the tube, the tightening force of the packing member against the shaft can be varied. Specifically, based on judgment of a sealing effect by the detection of a leakage or the like of the process fluid, the tightening force can be increased, or the pressure can be lowered when the shaft is difficult to move.

In the present invention, the through hole sealing device may further comprise an annular compressive member provided between the outer peripheral face of the packing member and the inner peripheral face of the tube, and the annular compressive member has a changeable diameter.

According to the present invention, by using the compressive member, the pressing force of the tube against the packing member is uniformized. As a result, the problem that the relative movement of the shaft is impeded due to a nonuniform pressing force is avoided, and the tight sealing performance is not degraded. Specifically, since the annular compressive member having the changeable diameter is provided between the outer peripheral face of the packing member and the inner peripheral face of the tube, the pressure of the tube can be uniformly transmitted to the packing member, which can be uniformly pressed against the outer peripheral face of the shaft.

In the present invention, the through hole sealing device may further comprise cleaning means provided adjacently to the shaft, for removing contamination on the outer peripheral face of the shaft.

According to the present invention, since the cleaning means removes contamination on the outer peripheral face of the shaft, well sealed state can be maintained without degrading tightness by the contamination adhered to the outer peripheral face of the shaft. Specifically, the provision of the cleaning means such as a wire brush or a scraper enables the removal of dust or the like adhered to the outer peripheral face of the shaft.

In the present invention, the through hole sealing device may further comprise: fluid injecting means for injecting a fluid different from a process fluid at a pressure higher than a pressure of the process fluid and at a regulated flow from the holding means toward a process fluid side or through the packing member held by the holding means toward the shaft.

According to the present invention, the gas injected by the gas injecting means can be used as a sealing gas for effectively isolating the process gas from the atmosphere. Since the state in which the packing member is in contact with the outer peripheral face of the shaft can be easily regulated by regulating the pressure of the tube, the flow of the sealing gas can be reduced and effective isolation can be conducted with a small amount of sealing gas. Specifically, since the gas different from the process fluid is injected from the holding means toward a process fluid side or through the packing member held by the holding means toward the shaft at a pressure higher than the pressure of the process fluid and at a regulated flow, the leakage of the process fluid to the outside can be satisfactorily prevented. Since tight sealing between the outer peripheral face of the shaft and the inner peripheral face of the packing member is satisfactorily conducted by the pressure of the tube, the amount of the sealing fluid injected by the gas injecting means can be reduced.

In the through hole sealing device of the present invention, the tube is provided with a supply port through which the fluid is supplied from the regulating means and a discharge port through which the fluid in the tube is discharged, and the regulating means is capable of discharging the fluid in the tube from the discharge port while supplying the fluid from the supply port into the tube.

According to the present invention, since the fluid in the tube can be discharged while supplying the fluid into the tube, the inside of the tube can be cooled by the fluid and heat resistance can be improved. Specifically, since the tube is provided with the supply port through which the fluid is supplied from the regulating means into the tube and the discharge port through which the fluid is discharged, and the regulating means is capable of discharging the fluid in the tube from the discharge port while supplying the fluid from the supply port into the tube, the inside of the tube can be cooled by the fluid. Thereby, the temperature of the tube can be kept at less than a predetermined value, and the device is satisfactorily applicable to equipment in which a high pressure process gas is used.

In the through hole sealing device of present invention, a connecting member is provided for connecting the holding means to the shaft such that an axial distance is provided between a connecting portion of the shaft and the connecting member and a connecting portion of the holding means and the connecting member, and when the shaft is pulled out from the through hole, the holding means, the packing member, and the tube are removable together from the through hole by the connecting member.

According to the present invention, when the shaft is pulled out from the through hole, since the packing member and the tube required for sealing in the through hole and the holding means can be moved together, the moving distance required for pulling out the shaft can be lessened. Besides, when the shaft is re-inserted into the through hole while maintaining the combination of the pulled-out shaft and sealing device, the tight sealing with respect to the shaft can be maintained. Specifically, since the packing member and the tube held by the holding means are also connected by means of the connecting member, by pulling out the shaft to some degree, the following portions can be removed together from the through hole, thereby lessening the moving distance required for pulling out the shaft from the through hole. For example, in a case where the shaft is pulled out in the vertical direction, since the vertical position up to which the shaft is hoisted is lowered by the length of the sealing device, the height of a hoisting device, the building or the like supporting the hoisting device can be lowered. Also, by adjusting the length of the connecting member to allow the packing member and the tube to be held on the periphery of the shaft after pulling out the shaft from the through hole, it is not necessary to re-mount the packing member or the tube and the holding means for sealing the periphery of the shaft when re-inserting the shaft through the through hole.

In the through hole sealing device of the present invention, the shaft is engaged with and communicates with a shutoff valve provided on a process fluid side of the wall when the shutoff valve is in a fully open position, and by disengaging the shaft from the shutoff valve and fully closing the shutoff valve, the shaft can be replaced without a leakage of the process fluid.

According to the present invention, since the shutoff valve is provided, the equipment can continue to be operated during replacement of the shaft. Specifically, the shutoff valve is provided on the process fluid side of the wall. When the shutoff valve is in the fully closed position, the shaft can be replaced without a leakage of the process fluid. Consequently, the shaft can be replaced even during the operation of a process.

In the through hole sealing device of the present invention, the wall is an outer wall of a metal melting furnace, and the shaft is a pipe used as a lance.

According to the present invention, a portion of an inserting hole of a lance inserted into the metal melting furnace can be tightly sealed with a simple structure and with a significantly reduced amount of the injected sealing gas. Since the maintenance of the sealing device is easy and the equipment cost is low, a maintenance cost of the metal melting furnace can be reduced and productivity can be improved. More specifically, the lance inserting hole provided in the metal melting furnace can be tightly sealed with a simple structure such that the sealing device can withstand a large pressure difference and the amount of the sealing gas can be reduced.

In the through hole sealing device of the present invention, the tube is not ring-shaped, and is comprised of a plurality of circumferentially divided tubes which are arranged in a ring-shape.

According to the present invention, since the tube is circumferentially divided into a plurality of segments, sealing of the shaft having a large diameter can be realized at a low cost and a maintenance cost is low. Specifically, since the tube is not ring-shaped but is comprised of the plurality of circumferentially divided tubes which can be arranged in a ring-shape, sealing of the shaft having a large diameter can be realized at a low cost. Further, if the tube should be damaged, the portion to be replaced would be only the damaged tube. Consequently, the maintenance cost is low.

### [Brief Description of the Drawings]

Fig. 1 is a cross-sectional view schematically showing a constitution of an embodiment of the present invention;
Fig. 2 is a partial cross-sectional view showing a constitution for supplying a tightening gas in the embodiment of Fig. 1;
Fig. 3 is a perspective view showing a structure of a compressive member 30 of the embodiment of Fig. 1;
Fig. 4 is a cross-sectional view schematically showing a constitution of a sealing device 40 according to another embodiment of the present invention;
Fig. 5 is a block diagram schematically showing a constitution of a regulating device 50 according to still another embodiment of the present invention;
Fig. 6 is a cross-sectional view schematically showing a constitution of a further embodiment of the present invention;
Fig. 7 is a cross-sectional view schematically showing a constitution of a still further embodiment of the present invention;
Fig. 8 is a cross-sectional view schematically showing a constitution of the conventional sealing device; and
Fig. 9 is a cross-sectional view showing an example of a sealing device disclosed in the prior art.

### [Best Mode for Carrying Out the Invention]

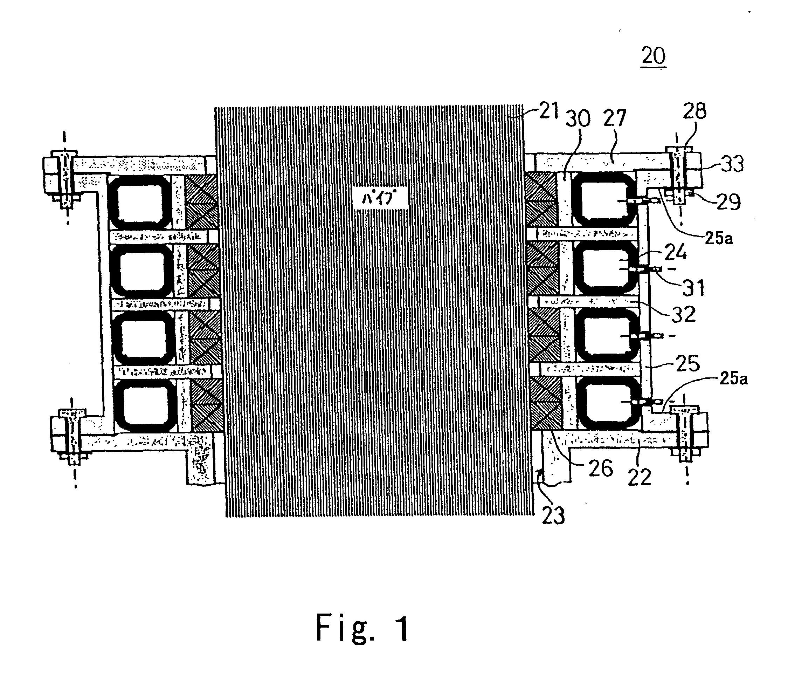

Fig. 1 schematically shows a constitution of a sealing device 20 according to an embodiment of the present invention. A pipe 21 penetrates through a pipe penetrating seat 23 provided in a wall face 22 of process equipment. A plurality of tubes 24 are provided on an outer side of the wall face 22 along an axis of the pipe 21. The tubes 24 are placed on an inner periphery of an outer tube 25. Gland packings 26 are placed between the tubes 24 and the pipe 21. The outer tube 25 is provided with flanges 25a on opposite sides in the axial direction of the pipe 21 and a packing gland 27 is mounted on the opposite side of the wall face 22. The flange 25a of the outer tube 25 and the packing gland 27, and the flange 25a of the outer tube 25 and the wall face 22, are respectively fastened by means of a bolt 28 and a nut 29. The tubes 24 are made of a rubber material, and expanded by a pressure generated when the inside thereof is filled with a fluid. The gland packings 26 are basically identical to the conventional gland packings. The outer tube 25, the packing gland 27, and ring spacers 32 are made of a metal such as iron.

In this embodiment, compressive members 30 are placed between the tubes 24 and the gland packings 26. The compressive members 30 are radially expandable/compressible and serve to uniformly transmit a pressing force generated by the expansion of the tubes 24 to outer peripheral faces of the gland packings 26. To expand the tubes 24, a tightening gas is supplied into the tubes 24 through tightening gas inlets/outlets 31. The plurality of tubes 24 and gland packings 26 are spaced apart in the axial direction of the pipe 21 by interposing the ring spacers 32. Since the outer tube 25 is mounted to the wall face 22 of the process equipment by means of the bolt 28 and the nut 29, the outer tube 25, along with the pipe penetrating seat 23, forms the through hole through which the pipe 21 penetrates. To maintain this tightness, gaskets 33 are interposed at a joint portion of the flange 25a of the outer tube 25 and the packing gland 27 and at a joint portion of the flange 25a of the outer tube 25 and the wall face 22.

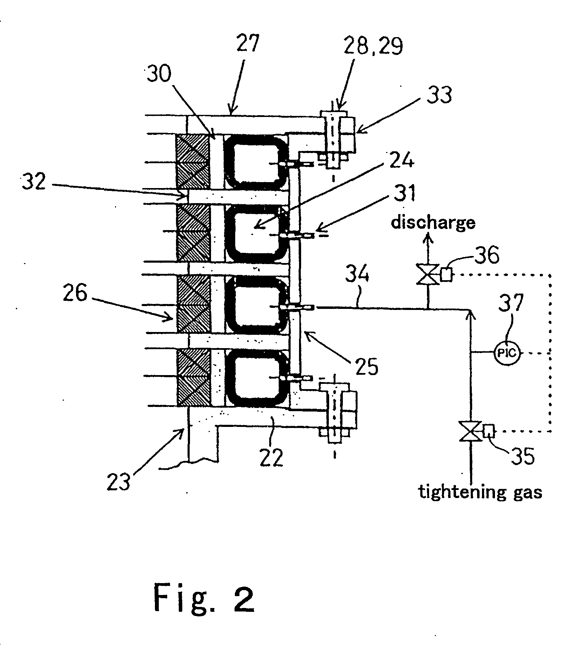

Fig. 2 shows a constitution for supplying the tightening gas to the tightening gas inlet/outlets 31 of Fig. 1 so as to regulate the pressure in the tubes 24. The tightening gas is supplied to the tightening gas inlet/outlet 31 through a pipe-line 34. The tightening gas such as an air or nitrogen is supplied by opening a supply valve 35. A discharge valve 36 is connected to the pipe-line 34, and by opening the discharge valve 36, the tightening gas can be diffused into atmosphere through the pipe-line 34. The open positions of the supply valve 35 and the discharge valve 36 are controlled by an output of a pressure regulator 37 so that the pressure in the tube 24 is kept constant. By changing setting of the pressure regulator 37 to thereby change the pressure in the tube 24, it is possible to regulate the pressing force of the gland packing 26 in sliding contact with the outer peripheral face of the pipe 21 of Fig. 1.

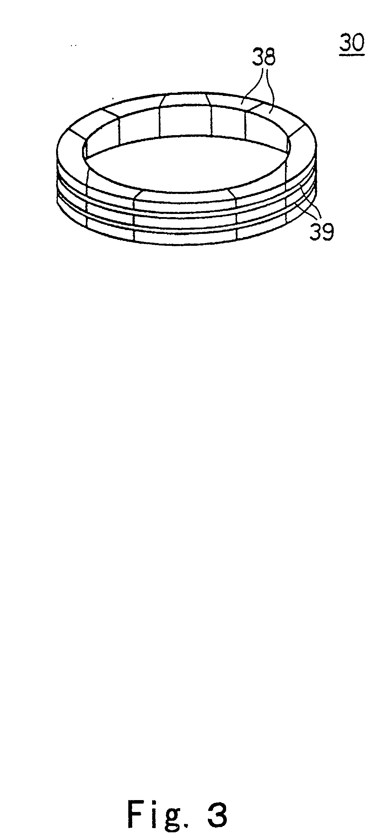

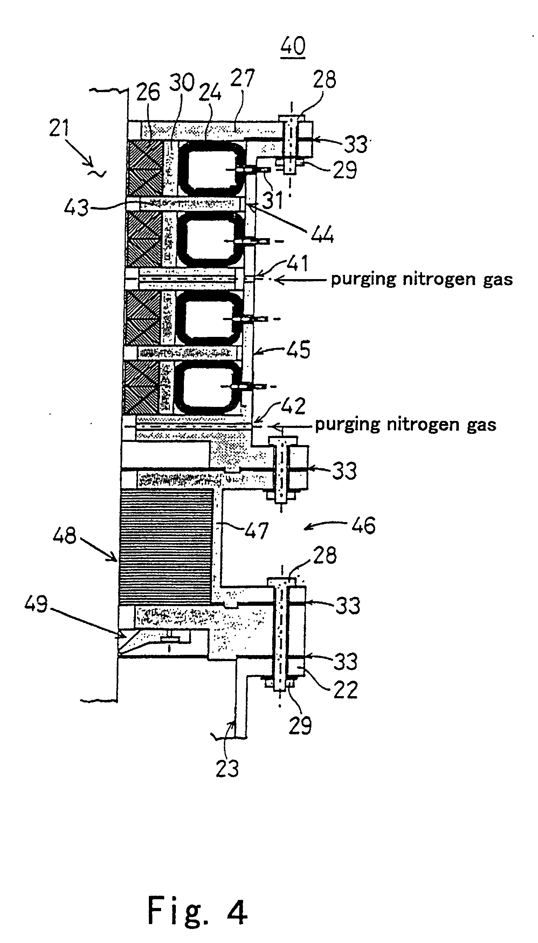

Fig. 3 shows a structure of the compressive member 30 of Fig. 1. The compressive member 30 is entirely ring-shaped and circumferentially divided into a plurality of segments 38. The segments 38 are kept so as to be ring-shaped and inwardly or outwardly displaceable in the radial direction so as to be entirely expandable/compressible by coil springs 39 fitted into grooves formed on the outer peripheral face thereof. The structure of the compressive member 30 is similar to the member disclosed in Figs. 3, 4 of Japanese Laid-Open Patent Publication No. Hei. 1 - 172506 (corresponding to Japanese Patent No. 2628172), except that the segments 38 are metallic.

Fig. 4 shows a constitution of a sealing device 40 according to another embodiment of the present invention. In this embodiment, there are provided a sealing device basically similar to the embodiment of Fig. 1, a scraper 49 for scraping substances adhered to a surface of the pipe 21, and a wire blush 48 for cleaning the surface of the pipe 21. A purging nitrogen gas inlet 41 is provided at an intermediate portion of the sealing device. The purging nitrogen gas is kept at a pressure higher than that of the process fluid in the wall face 22 by a predetermined value, for example, 1kg f/cm², and a small amount of nitrogen gas is adapted to partially go into the inside of the wall face 22 through a minute clearance between the pipe 21 and the gland packings 26.

When the pipe 21 is moved in the axial direction, the pressure in the tubes 24 is reduced to alleviate the tightening force between the gland packings 26 and the pipe 21. Thereby, since the clearance between the gland packings 26 and the pipe 21 is increased, more of the nitrogen gas supplied through the purging nitrogen gas inlet 41 goes into the increased clearance. The nitrogen gas going into the clearance partially goes into the process fluid, and the other nitrogen gas is discharged the outside of the sealing device 40. This can prevent the process fluid from flowing to the outside through the increased clearance and from touching the tube 24. Even if the process fluid has a high temperature, the tube 24 is not damaged by the process fluid because the tube 24 is kept untouched by the process fluid. Since the pipe 21 and the gland packings 26 are in contact with each other during the movement of the pipe 21, the amount of the used purging nitrogen gas is significantly reduced as compared to the conventional method.

When the process fluid has a high temperature, includes dust, or includes a component detrimental to the sealing device, it is necessary to isolate the process fluid from the sealing device. For this purpose, a purging nitrogen gas inlet 42 is also provided at an end portion of the sealing device that is close to the wall face 22 and the purging nitrogen gas is injected therethrough. The amount of the purging nitrogen gas may be regulated so as to be constant or regulated by injecting the purging nitrogen gas intermittently.

For the purpose of uniformizing the pressure outside of all the multi-stage tubes 24 by the nitrogen gas which is injected through the purging nitrogen gas inlet 41 at the intermediate portion of the sealing device, the ring spacers 43 are provided with pressure-uniformizing holes 44 to allow spaces defined by the ring spacers 43 to communicate with one another. The outer tube 45 of this embodiment is mounted to the wall face 22 by means of a cleaning device 46.

In the cleaning device 46, the wire brush 48 and the scraper 49 are held by means of the holder 47. The scraper 49 is provided for scraping the substances adhered to the surface of the pipe 21. Further, the wire brush 48 is provided for cleaning the surface of the pipe 21. When the pipe 21 is a lance or the like inserted into the metal melting furnace, the dust is likely to be adhered to the surface thereof, or a melted metal or slag is likely to be adhered thereto and solidified thereon. If the pipe 21 with the substances adhered to the surface thereof makes contact with the gland packings 26, then the substances might be adhered to the gland packings 26, causing flexibility of the gland packings 26 to be lessened, or the existence of the substances in the clearance correspondingly increases the clearance, causing tightness to be reduced. The nitrogen gas injected through the purging nitrogen gas inlet 42 also serves to blow off the substances removed by the scraper 49 or the wire brush 48 to the inside of the device.

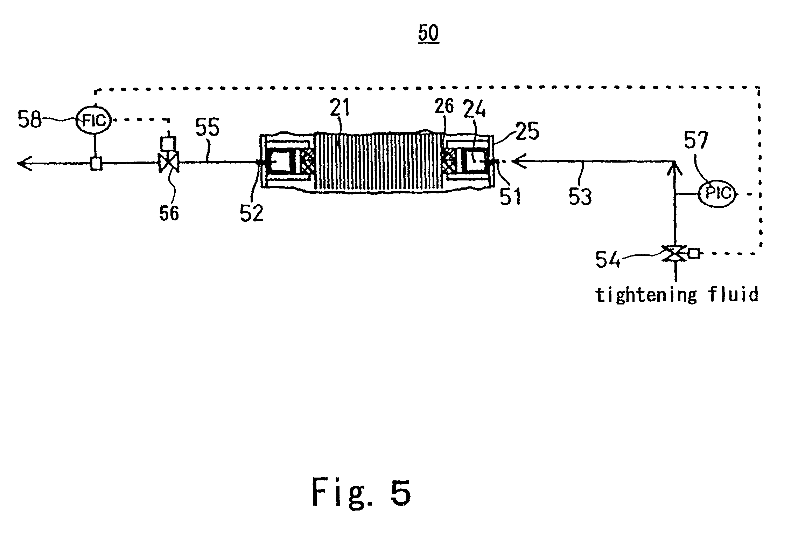

Fig. 5 shows a constitution for discharging a fluid in the tube 24 while supplying a tightening fluid into the tube 24 by using a regulator 50 according to still another embodiment of the present invention. The tube 24 is provided with a tightening fluid supply port 51 and a tightening fluid outlet port 52. The tightening fluid having a pressure controlled by a pressure control valve 54 is supplied to the tightening fluid supply port 51 through a supply pipe-line 53. The tightening fluid is discharged from the tightening fluid outlet port 52 and sent through the discharge pipe line 55 so that the flow is controlled by the flow control valve 56. The pressure control valve 54 and the flow control valve 56 are respectively regulated by a pressure regulator 57 and a flow regulator 58 for respectively detecting and regulating the pressure of the supply tube pipe-line 53 and the flow of the discharge pipe-line 55.

The pressure regulator 57 is adapted to regulate the tightening force of the gland packings 26 in contact with the pipe 21 so that the pressure of the tightening fluid supply port 51 has an appropriate value. The flow regulator 58 regulates the amount of the discharged tightening fluid so as to be constant. It should be noted that, when the pressure on the side of the tightening fluid supply port 51 is greater than the pressure as a control target value, cascade control is executed in such a manner that the pressure regulator 57 gives an instruction to the flow regulator 58 to cause the amount of fluid discharged from the tightening fluid outlet port 52 to be automatically increased. The set value of the pressure on the side of the tightening fluid supply port 51 is remotely controlled externally of the regulator 50. For example, when the pipe 21 is moved, the set value is remotely set to 4kgf/cm² G, while when the pipe 21 is stopped, the set value is remotely set to 6kgf/cm² G.

In this embodiment, since the tightening fluid in the tube 24 is replaced all the time, the tube 24 is kept so as not to have a high temperature. For example, in a case where a high-temperature fluid is flowing through the pipe 21 or a process fluid has a high temperature, the temperature of the entire sealing device is gradually increased. Therefore, without the control described in this embodiment, the temperature of the tube 24 might be increased and in time, exceed a heat-resistant temperature of the tube 24, causing the tube 24 to be rapidly degraded. Since the tube 24 is made of an elastic material such as rubber, the heat resistance of the material itself is not so high. The tightening fluid may be a gas such as nitrogen or a liquid such as water. While the gland packings 26 in contact with the pipe 21 have two stages and the single tube 24 presses the gland packings 26 in Fig. 5, the multi-stage tubes in Fig. 1 or 4 may be provided with the supply pipe lines 53 and the discharge pipe lines 55 and the tightening fluid can be uniformly distributed to the tube 24 in each stage by a branch pipe provided with a restricting portion.

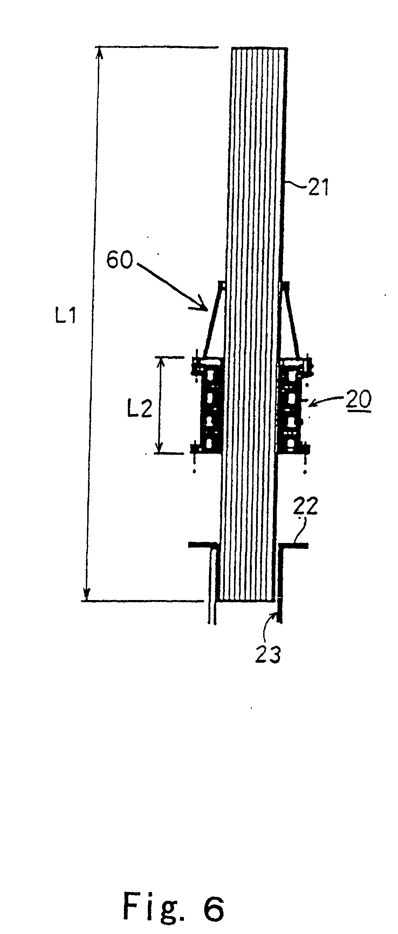

Fig. 6 shows a constitution of a further embodiment of the present invention, in which the sealing device 20 similar to that of Fig. 1 is connected to the pipe 21 by means of a connecting member 60 such as a chain, and when the pipe 21 is pulled out from the pipe penetrating seat 23 of the wall face 22, the sealing device 20 together with the pipe 21, can be pulled out. When the pipe 21 is pulled out with the sealing device 20 mounted to the wall face 22, it is necessary to pull out the pipe 21 by a length L1 from the wall face 22 and further pull out the sealing device 20 by a length L2 therefrom. On the other hand, if the sealing device 20 and the pipe 21 are connected by means of the connecting member 60 like this embodiment, then the pipe 21 can be removed from the equipment by pulling out the pipe 21 by the length L1 from the wall face 22.

In particular, when the pipe 21 needs to be pulled out in the vertical direction, a stroke of a hoisting device for pulling out the pipe 21 can be shortened by the length of L2 of the sealing device 20, or the height of a building in which the equipment is accommodated can be lowered. The connecting member 60 can be mounted all the time while the pipe 21 is operating as a lance or the like. In that case, the moving distance of the pipe 21 is limited to less than the length of the connecting member 60. Such limitation of the moving distance is eliminated and the pipe 21 can be displaced greatly in the axial direction by removing the connecting member 60. By connecting the pipe 21 and the sealing device 20 by means of the connecting member like this embodiment, it is not necessary to re-insert the pipe 21 into the sealing device 20 and adjustment of the clearance or the like can be simplified when the pipe 21 is newly mounted to the wall face 22.

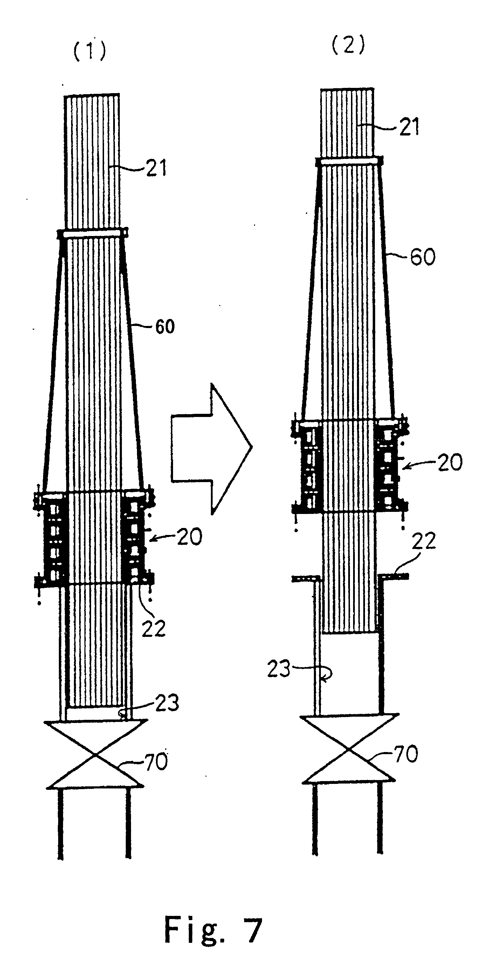

Fig. 7 shows a still further embodiment of the present invention in which a shutoff valve 70 is provided at an end face of the pipe penetrating seat 23 and the pipe 21 is engaged with and communicates with the shutoff valve 70 when the shutoff valve 70 is in a fully open position and the pipe 21 is disengaged from and does not communicate with the shutoff valve 70 when the shutoff valve 70 is in a fully closed position . A process gas or the like is prevented from leaking toward the pipe penetrating seat 23. Fig. 7(1) shows the state in which a tip end portion of the pipe 21 is disengaged from the shutoff valve 70. Fig. 7 (2) shows the state in which the sealing device 20 is removed from the wall face 22 and the pipe 21 and the sealing device 20 are removed together from the wall face 22 with the pipe 21 and the sealing device 20 connected by means of the connecting member 60. During this operation, by keeping the shutoff valve 70 in the fully closed position, the pipe 21 can be replaced without discharging the process fluid to the outside.

While in each of the above-described embodiments, the pipe 21 is assumed to be the lance of the metal melting furnace and movable in the vertical direction, the pipe 21 is not limited to the lance of the metal melting furnace but is applicable to various types of equipment that handles a fluid at a high pressure greater than the atmospheric pressure or at a vacuum less than the atmospheric pressure, and supplies a fluid or a solid from outside through a pipe penetrating through the wall, or discharges them to the outside through the pipe.

The axis of the pipe 21 may be horizontal or inclined as well as vertical. The present invention is likewise applicable to tight sealing of a shaft for transmitting a mechanical displacement or a drive force as well as the tight sealing of the pipe 21 through which the fluid or the solid is flowing.

While the tube 24 is ring-shaped, a plurality of circumferentially divided tubes may be arranged in a ring-shape. Since the plurality of circumferentially divided tubes can be arranged in a ring-shape, the shaft of a large diameter can be sealed at a low cost. If the tube should be damaged, only the damaged tube would be replaced. Consequently, a maintenance cost is low.

### [Industrial Applicability]

Since the present invention is constituted as described above, it is suitable as a through hole sealing device capable of well performing sealing if a pressure difference between a process fluid such a gas in a furnace and atmosphere becomes large and reducing the amount of the sealing nitrogen gas.

## Claims

1. A through hole sealing device for tightly sealing a periphery of a shaft in a through hole, the shaft being inserted into the through hole formed in a wall in which a process fluid having a pressure different from an atmospheric pressure is held, and displacing relatively to the wall, wherein a clearance is provided between an outer peripheral face of the shaft and an inner peripheral face of the through hole, the device comprising:
a packing member that covers the outer peripheral face of the shaft;
a tube inserted between an outer peripheral face of the packing member and the inner peripheral face of the through hole and wound outside of the shaft, the tube having flexibility;
holding means for holding the packing member and the tube in the through hole with respect to the shaft; and
regulating means for filling a fluid in the tube and regulating a pressure of the fluid.

2. The through hole sealing device according to Claim 1, further comprising an annular compressive member provided between the outer peripheral face of the packing member and the inner peripheral face of the tube, the annular compressive member having a changeable diameter.

3. The through hole sealing device according to Claim 1 or 2, further comprising cleaning means provided adjacently to the shaft, for removing contamination on the outer peripheral face of the shaft.

4. The through hole sealing device according to any of Claims 1 to 3, further comprising: fluid injecting means for injecting a fluid different from a process fluid at a pressure higher than a pressure of the process fluid and at a regulated flow from the holding means toward a process fluid side or through the packing member held by the holding means toward the shaft.

5. The through hole sealing device according to any of Claims 1 to 4, wherein the tube is provided with a supply port through which the fluid is supplied from the regulating means and a discharge port through which the fluid in the tube is discharged, and
the regulating means is capable of discharging the fluid in the tube from the discharge port while supplying the fluid from the supply port into the tube.

6. The through hole sealing device according to any of Claims 1 to 5, wherein a connecting member is provided for connecting the holding means to the shaft such that an axial distance is provided between a connecting portion of the shaft and the connecting member and a connecting portion of the holding means and the connecting member, and when the shaft is pulled out from the through hole, the holding means, the packing member, and the tube are removable together from the through hole by the connecting member.

7. The through hole sealing device according to any of Claims 1 to 6, wherein the shaft is engaged with and communicates with a shutoff valve provided on a process fluid side of the wall when the shutoff valve is in a fully open position, and by disengaging the shaft from the shutoff valve and fully closing the shutoff valve, the shaft can be replaced without leakage of the process fluid.

8. The through hole sealing device according to any of Claims 1 to 7, wherein the wall is an outer wall of a metal melting furnace, and the shaft is a pipe used as a lance.

9. The through hole sealing device according to Claim 1, wherein the tube is not ring shaped, and is comprised of a plurality of circumferentially divided tubes which are arranged in a ring-shape.
